# EUROPÄISCHE PATENTSCHRIFT

(11) **EP 0 532 994 B1**
(45) Veröffentlichungstag und Bekanntmachung des Hinweises auf die Patenterteilung: **30.07.1997**
(21) Anmeldenummer: 92115156.9
(22) Anmeldetag: 04.09.1992
(51) Int. Cl.: C09B 45/16

(54) **Unsymmetrische 1:2-chrom-komplexfarbstoffe**
Asymmetric 1:2-chromium complex dyestuffs
Colorants de type complexe de chrome 1:2 asymétrique

(30) Priorität: 17.09.1991 DE 4130806
(43) Veröffentlichungstag der Anmeldung: 24.03.1993
(73) Patentinhaber: BAYER AG, 51368 Leverkusen (DE)
(72) Erfinder: Mennicke, Winfried, Dr., W-5090 Leverkusen 1 (DE)

(56) Entgegenhaltungen:
- EP-A- 0 260 562
- EP-A- 0 267 385
- FR-A- 2 262 084
- GB-A- 2 027 734

## Beschreibung

Die vorliegende Erfindung betrifft unsymmetrische 1:2-Chromkomplexfarbstoffe der Formel (I) 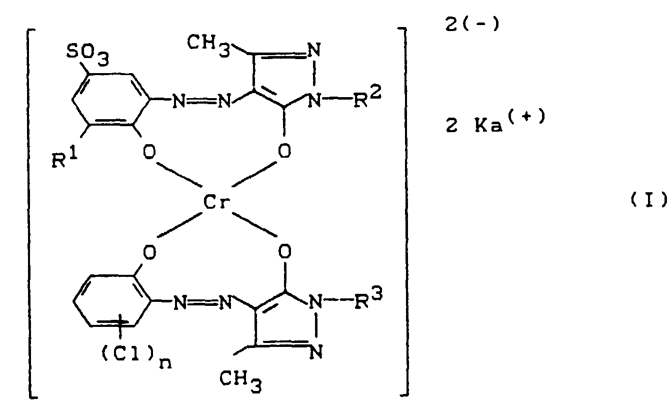 worin
- R¹: für Wasserstoff, Chlor oder Nitro steht,
- R² und R³: unabhängig voneinander für Wasserstoff oder einen Rest der Formel 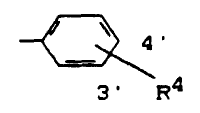 stehen, worin
- R⁴: für Alkyl steht, welches in 3'- oder 4'-Stellung des Phenylringes gebunden ist,
mit der Maßgabe, daß einer der Reste R², R³ Wasserstoff bedeutet,
- n: für 1 oder 2 steht und
- Ka⁽⁺⁾: für ein Kation steht.

Bevorzugte Alkylgruppen des Restes R⁴ sind solche mit 1 bis 5 C-Atomen, die gegebenenefalls weiter substituiert sein können, vorzugsweise durch CN, Cl, OH oder C₁-C₄-Alkoxy.

Das durch Ka⁽⁺⁾ dargestellte Kation ist vorzugsweise ein Alkalikation, insbesondere ein Lithium-, Natrium- oder Kaliumkation, ein Ammoniumion oder das Kation eines organischen Amins.

Insbesondere bevorzugt sind die erfindungsgemäßen Farbstoffe der Formel (II) 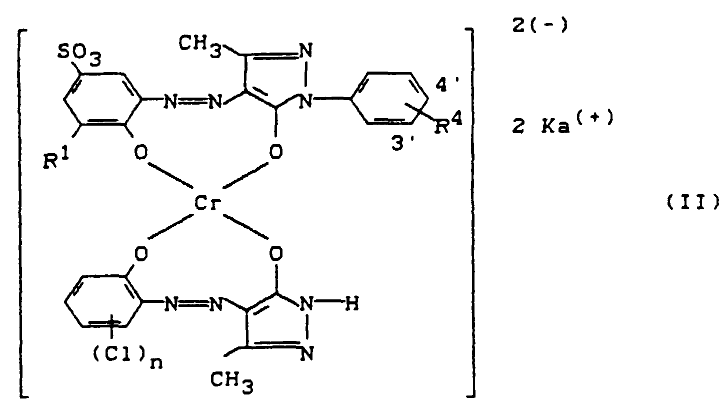 worin
- R¹, R⁴, n und Ka⁽⁺⁾: die gleiche Bedeutung wie in Formel (I) haben, und
der Rest R⁴ in 3'- oder bevorzugt in 4'-Stellung des Phenylringes gebunden ist.

Die GB-A 2 027 734 betrifft Farbstoffe, die das Grundgerüst der von uns beanspruchten Farbstoffe besitzen. Die Farbstoffe der Beispiele 11, 12, 23, 38 und 49 unterscheiden sich von den erfindungsgemäßen Farbstoffen durch die Abwesenheit von Substituenten am an den Pyrazolonring gebundenen Phenyl. Der Farbstoff des Beispiels 52 unterscheidet sich vom nächstliegenden erfindungsgemäßen Farbstoff durch einen Nitro- anstelle eines Chlor-Substituenten am Phenylring. Die erfindungsgemäßen Farbstoffe sind denen der GB-A 2 027 734 im Hinblick auf alkalische Walkechtheit (als Textilfarbstoffe) und im Hinblick auf Schweißechtheit und Diffusionsechtheit gegenüber Weich-PVC (als Lederfarbstoffe) überlegen.

Die erfindungsgemäßen Farbstoffe der Formel (I) können in an sich bekannter Weise erhalten werden, indem man einen Farbstoff der Formel (III) 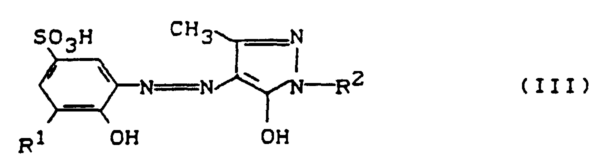 worin
- R¹ und R²: die unter Formel (I) angegebene Bedeutung haben, oder der Formel (IV) 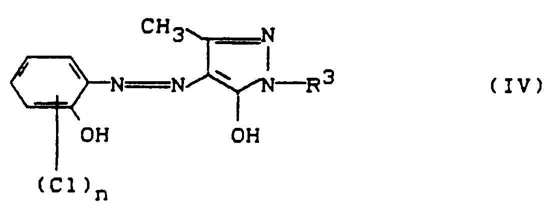 worin
R³ und n ebenfalls die unter Formel (I) angegebene Bedeutung haben,
mit einem chromabgebenden Mittel in den 1:1-Chromkomplex überführt und diesen jeweils mit einem nichtmetallisierten Farbstoff der Formel (IV) bzw. (III) umsetzt. Bevorzugt erfolgt die Umsetzung so, daß man von dem 1:1-Chromkomplex eines sulfogruppenhaltigen Farbstoffes der Formel (III) ausgeht und an diesen einen sulfogruppenfreien Farbstoff der Formel (IV) anlagert.

Die Monoazofarbstoffe der Formeln (III) und (IV) können in bekannter Weise durch Kuppeln von diazotierten o-Aminophenolen der Formeln (V) bzw. (VI) 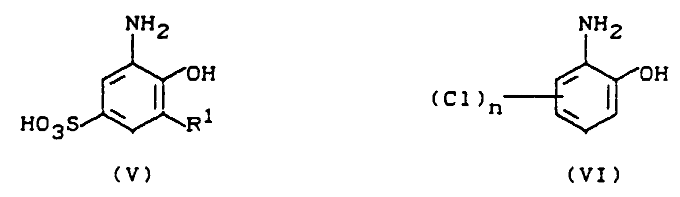 worin
- R¹ und n: die obengenannte Bedeutung haben,
auf Pyrazolone der Formeln (VII) bzw. (VIII) 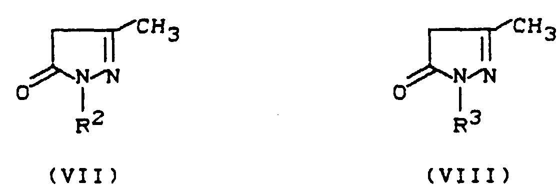 worin
- R² und R³: ebenfalls die obengenannte Bedeutung haben,
erhalten werden.

Geeignete o-Aminophenole der Formeln (V) und (VI) sind beispielsweise:

2-Aminophenol-4-sulfonsäure, 2-Aminophenol-6-chlor- oder -6-nitro-4-sulfonsäure, 4- oder 5-Chlor-2-aminophenol oder 4,6-Dichlor-2-aminophenol.

Bevorzugte o-Aminophenole (V) zur Herstellung der erfindungsgemäßen 1:2-Chromkomplexfarbstoffe der Formel (I) sind 2-Aminophenol-6-nitro-4-sulfonsäure und 2-Aminophenol-6-chlor-4-sulfonsäure.

Als Kupplungskomponenten der Formeln (VII) oder (VIII) kommen beispielsweise in Betracht:

3-Methyl-5-pyrazolon, 1-(3'- oder 4'- Methyl-, -Ethyl-, -Propyl-, -Isopropyl-, -Butyl-, -sec.-Butyl-, -tert.-Butyl-, -Isobutyl- oder -Amylphenyl)-3-methyl-5-pyrazolon.

Die Überführung der Azofarbstoffe der Formel (III) oder (IV) in den 1:1-Chromkomplex erfolgt nach üblichen, an sich bekannten Methoden, indem man z.B. den metallfreien Farbstoff mit einem Salz des dreiwertigen Chroms, wie Chromfluorid, Chromchlorid, Chromsulfat oder Chromformiat in wäßrigem Medium bei Siedetemperatur oder gegebenenfalls höherer Temperatur umsetzt.

Die Umsetzung eines so hergestellten 1:1-Chromkomplexes mit einem metallfreien Farbstoff der Formel (IV) bzw. (III) erfolgt zweckmäßig in alkalischem bis schwach saurem Medium bei Raumtemperatur oder erhöhter Temperatur, vorzugsweise im Bereich von 50 bis 100°C. Die Reaktionspartner werden vorzugsweise in stöchiometrischen Mengen eingesetzt; ein Überschuß an chromhaltigem Farbstoff wirkt sich im allgemeinen weniger nachteilig aus als ein Überschuß an chromfreiem Farbstoff. Die bei der Anlagerung des metallfreien Farbstoffes an den 1:1-Chromkomplex freiwerdende Säure wird durch Zusatz alkalisch wirkender Mittel bei schwach saurem bis schwach alkalischem pH-Wert abgefangen, beispielsweise durch Zusatz von Hydroxiden oder Carbonaten von Alkalimetallen, wie Lithium-, Natrium-, Kaliumhydroxid oder -carbonat, von Ammoniak oder organischen Aminen, wie Mono-, Di- oder Triethylamin, Mono-, Di- oder Triethanolamin, oder von Tetraalkylammoniumhydroxiden, wie Tetramethylammoniumhydroxid. Vorzugsweise setzt man die alkalisch wirkenden Mittel so zu, daß die Reaktion bei einem konstanten pH-Wert abläuft.

Die hier beschriebenen Umsetzungen zu den erfindungsgemäßen unsymmetrischen 1:2-Chromkomplexfarbstoffen können zur Beschleunigung der Reaktion auch in Gegenwart organischer Lösungsmittel durchgeführt werden. Geeignete organische Lösungsmittel sind beispielsweise niedere Alkohole, wie Ethanol, Ketone, wie Ethylmethylketon, Carbonamide, wie Formamid, Dimethylformamid, N-Methylpyrrolidon, Glykole, wie Ethylenglykol, 1,2-Propylenglykol oder vorzugsweise deren Mono-C₁-C₄-alkylether, wie Ethylglykol, 1-Ethoxy-2-propanol.

Am Ende der Reaktion liegen die erfindungsgemäßen Farbstoffe der Formel (I) als Salz der Komplexsäure und der an sie gebundenen SO₃H-Gruppe mit den oben erwähnten alkalisch wirkenden Mitteln vor, beispielsweise als Alkalisalze bei Verwendung von Alkalihydroxiden oder -carbonaten oder als Ammoniumsalze bei Verwendung von Ammoniak, Aminen oder Tetraalkylammoniumhydroxiden.

Die so hergestellten 1:2-Chromkomplexfarbstoffe können durch Aussalzen mit Alkalisalzen, Sprühtrocknung oder Eindampfen auf der Walze isoliert und mit den üblichen Hilfs- und Stellmitteln zu wasserlöslichen Präparationen verarbeitet werden.

Die Zubereitung zu flüssigen Präparat ionen unter Verwendung von organischen Lösungsmitteln, gegebenenfalls im Gemisch mit Wasser und gegebenenfalls unter Zusatz von Lösungsvermittlern, wie beispielsweise Harnstoff, ist ebenfalls möglich und insofern empfehlenswert, als die Synthese der 1:2-Chromkomplexfarbstoffe oder zumindestens der letzte Schritt dieser Synthese und die Herstellung ihrer Lösungen in einem Topf ohne Zwischenisolierung und in einer Stufe vollzogen werden kann. Besonders vorteilhaft ist das Verfahren der DE-OS 24 43 483, bei dem man u. a. den metallfreien Farbstoff in hydroxylgruppenhaltigen Lösungsmitteln und in Gegenwart von alkalisch wirkenden Lithiumsalzen an den 1:1-Chromkomplex anlagert und dabei gleichzeitig die stabile konzentrierte Lösung des fertigen 1:2-Chromkomplexfarbstoffes erhält. Geeignete Lösungsmittel für dieses Verfahren sind insbesondere Glykole, wie Ethylenglykol, 1,2-Propylenglykol, oder vorzugsweise deren Mono-C₁-C₄-alkylether, wie Ethylglykol, 1-Ethoxy-2-propanol.

Die in Wasser gut löslichen festen Präparationen oder die mit Wasser gut mischbaren flüssigen Präparationen der erfindungsgemäßen 1:2-Chromkomplexfarbstoffe der Formel (I), die je nach Einstellung weitere übliche Zusätze enthalten können, wie anorganische Salze, Dispergiermittel, Emulgatoren, Entschäumer, Entstaubungsmittel, Netzmittel u. a., eignen sich zum Färben und Bedrucken der verschiedensten Stoffe, vor allem zum Färben von natürlichen und synthetischen amidgruppenhaltigen Materialien, wie Wolle, Seide, Leder, Polyamid- oder Polyurethanfaser.

Bevorzugtes Anwendungsgebiet ist das Färben von Leder nach verschiedenen Applikationen. Die festen Präparationen eignen sich vor allem zum Färben im Faß. Dabei ziehen die erfindungsgemäßen Farbstoffe auf Ledern unterschiedlicher Farbstoffaffinität, wie chromgegerbtes Leder, verschieden nachgegerbte Leder oder Veloursleder vom Rind oder Schwein, gut auf. Sie färben egal und weisen bei zunehmendem Farbstoffangebot ein gutes Aufbauvermögen auf, ohne daß es dabei zu unerwünschten Bronzierungseffekten kommt. Die flüssigen Präparationen können neben der Faßfärbung auch zum Färben auf Durchlaufmaschinen, zum Anfärben von Appreturen und Zurichtflotten und vor allem zum Spritzfärben mit und ohne Appretur eingesetzt werden.

Die erzielten, im allgemeinen roten Färbungen sind licht- und naßecht; die Lederfärbungen zeichnen sich zudem durch eine gute Diffusionsechtheit aus.

### Beispiele

### Beispiel 1

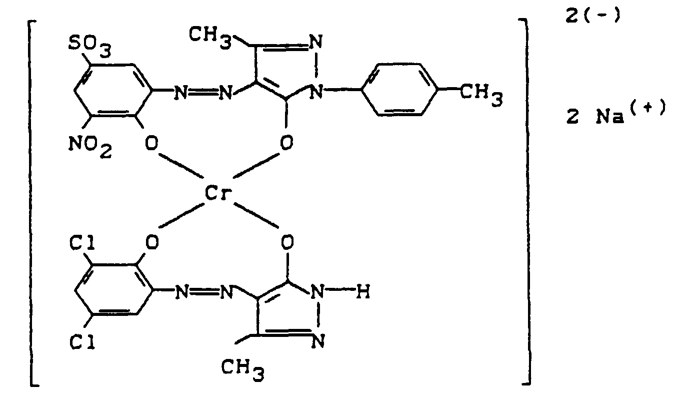

0,1 Mol Chrom-1:1-Komplex des Farbstoffes aus diazotierter 2-Aminophenol-6-nitro-4-sulfonsäure und 1-(4'-Methylphenyl)-3-methyl-5-pyrazolon wird in einem Liter Wasser eingetragen und mit 0,1 Mol Monoazofarbstoff aus diazotiertem 4,6-Dichlor-2-aminophenol und 3-Methyl-5-pyrazolon versetzt. Das Gemisch wird gut verrührt und durch Zutropfen von 5 N Natronlauge auf pH 7,0 bis 7,5 eingestellt. Man erwärmt innerhalb von einer Stunde auf 75°C und hält dabei den pH-Wert mit 5 N Natronlauge bei 6,5 bis 7,0. Nach Erreichen von 70 bis 75°C rührt man etwa eine Stunde bei dieser Temperatur und pH 6,5 bis 7,0 weiter, bis beide Ausgangsverbindungen verschwunden sind. Es entsteht eine intensiv dunkelrote Lösung, welche beim Sprühtrocknen in ein dunkelrotes Pulver übergeht. Dieses ist gut wasserlöslich und färbt Wolle, Polyamid und Leder in gelbstichig roten Tönen von guten Echtheiten.

### Beispiel 2

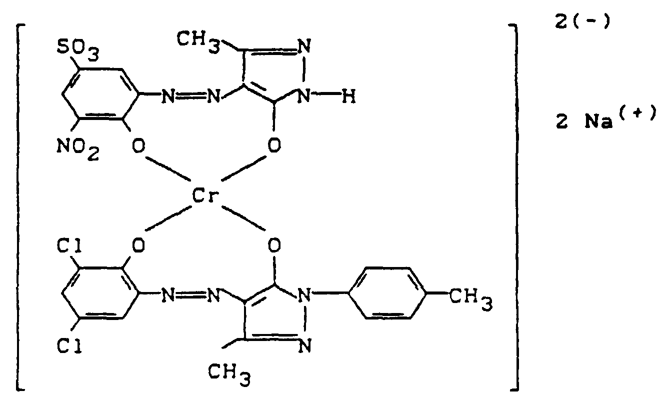

0,1 Mol Chromkomplex des Farbstoffes aus diazotierter 2-Aminophenol-6-nitro-4-sulfonsäure und 3-Methyl-5-pyrazolon und 0,1 Mol Monoazofarbstoff aus diazotiertem 4,6-Dichlor-2-aminophenol und 1-(4'-Methylphenyl)-3-methyl-5-pyrazolon werden in einem Liter Wasser bei 75°C und pH 6,5 bis 7,0 zum unsymmetrischen 1:2-Chrommischkomplex umgesetzt. Das durch Sprühtrocknen erhältliche Pulver gibt auf Wolle, Polyamid und Leder gelbstichig rote Färbungen, deren Echtheiten mit denen des Beispiels 1 vergleichbar sind.

### Beispiel 3

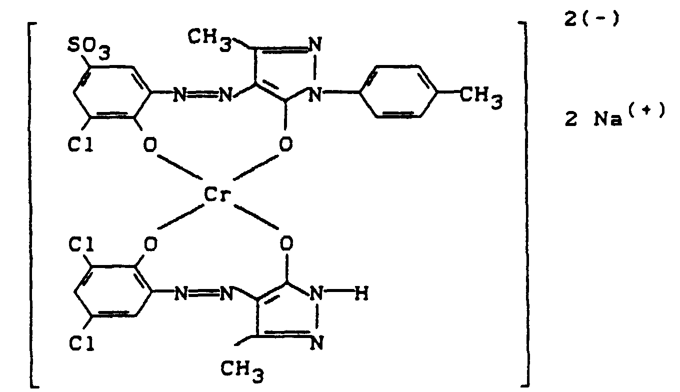

Lagert man 0,1 Mol Monoazofarbstoff aus diazotiertem 4,6-Dichlor-2-aminophenol und 3-Methyl-5-pyrazolon in einem Liter Wasser bei 75°C und pH 6,5 bis 7,0 an 0,1 Mol Chrom-1:1-Komplex des Farbstoffes aus diazotierter 2-Aminophenol-6-chlor-4-sulfonsäure und 1-(4'-Methylphenyl)-3-methyl-5-pyrazolon an, so entsteht ein unsymmetrischer 1:2-Chrommischkomplex, der auf Wolle, Polyamid und Leder blaustichig rote Färbungen liefert.

### Beispiel 4

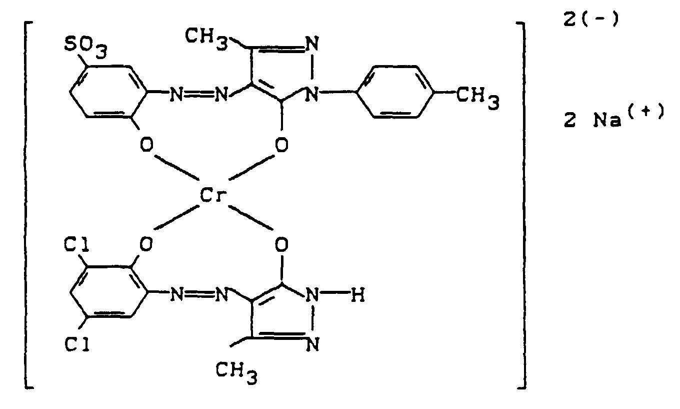

Der aus 0,1 Mol 1:1-Chromkomplex des Azofarbstoffes aus diazotierter 2-Aminophenol-4-sulfonsäure und 1-(4'-Methylphenyl)-3-methyl-5-pyrazolon und aus 0,1 Mol Azofarbstoff aus diazotiertem 4,6-Dichlor-2-aminophenol und 3-Methyl-5-pyrazolon in Gegenwart von Natronlauge bei pH 6,5 bis 7,0 und 75°C erhältliche 1:2-Chrommischkomplexfarbstoff färbt Wolle, Polyamid und Leder in Scharlachtönen, Die Färbungen sind licht- und naßecht; die Spritzfärbung auf Leder zeichnet sich durch eine gute Diffusionsechtheit aus.

### Beispiele 5 bis 27

Arbeitet man wie in Beispiel 1 beschrieben, verwendet jedoch 1:1-Chromkomplexe von Azofarbstoffen, die in der folgenden Tabelle 1 in Spalte 1 aufgeführt sind, und als Reaktionspartner stöchiometrische Mengen der in Spalte 2 stehenden Azofarbstoffe, so erhält man wertvolle 1:2-Chromkomplexfarbstoffe, die Wolle, Polyamid und Leder in scharlach bis blaustichig roten Tönen mit guten Echtheiten färben.

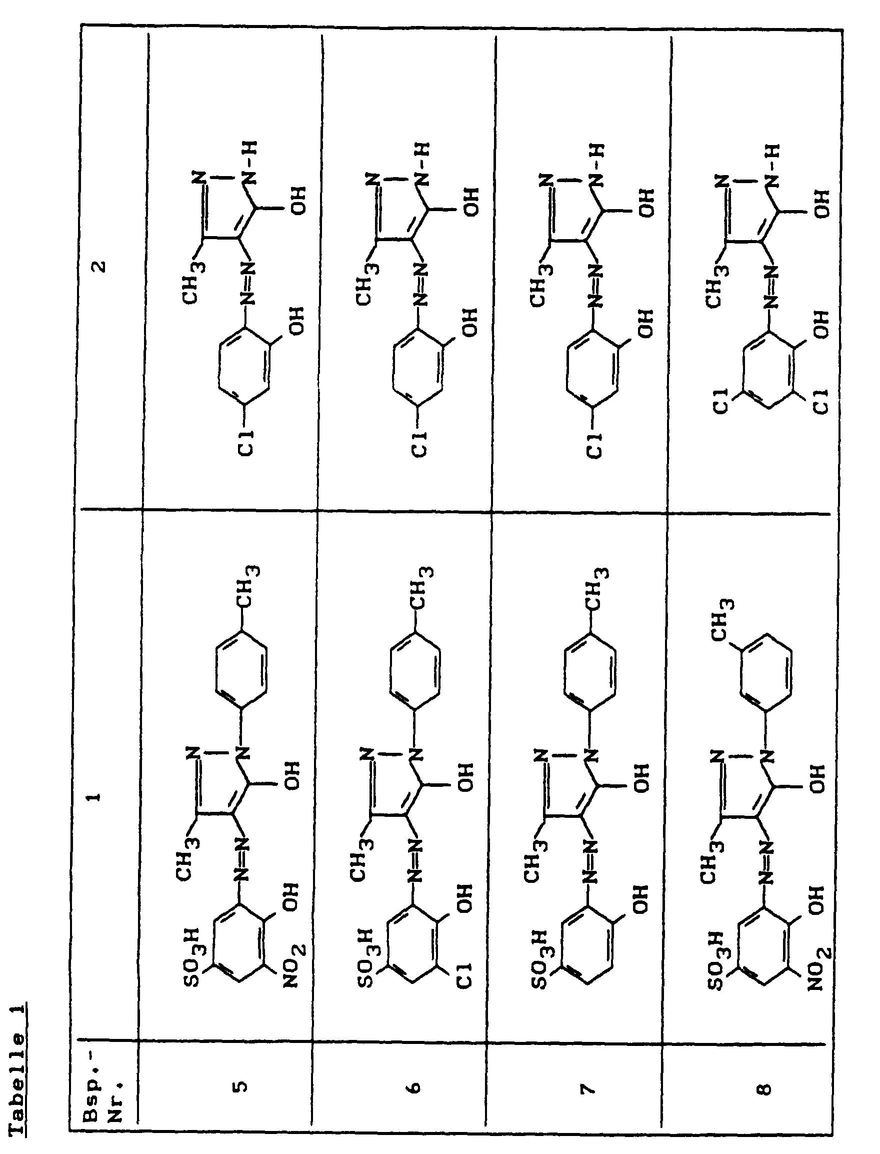

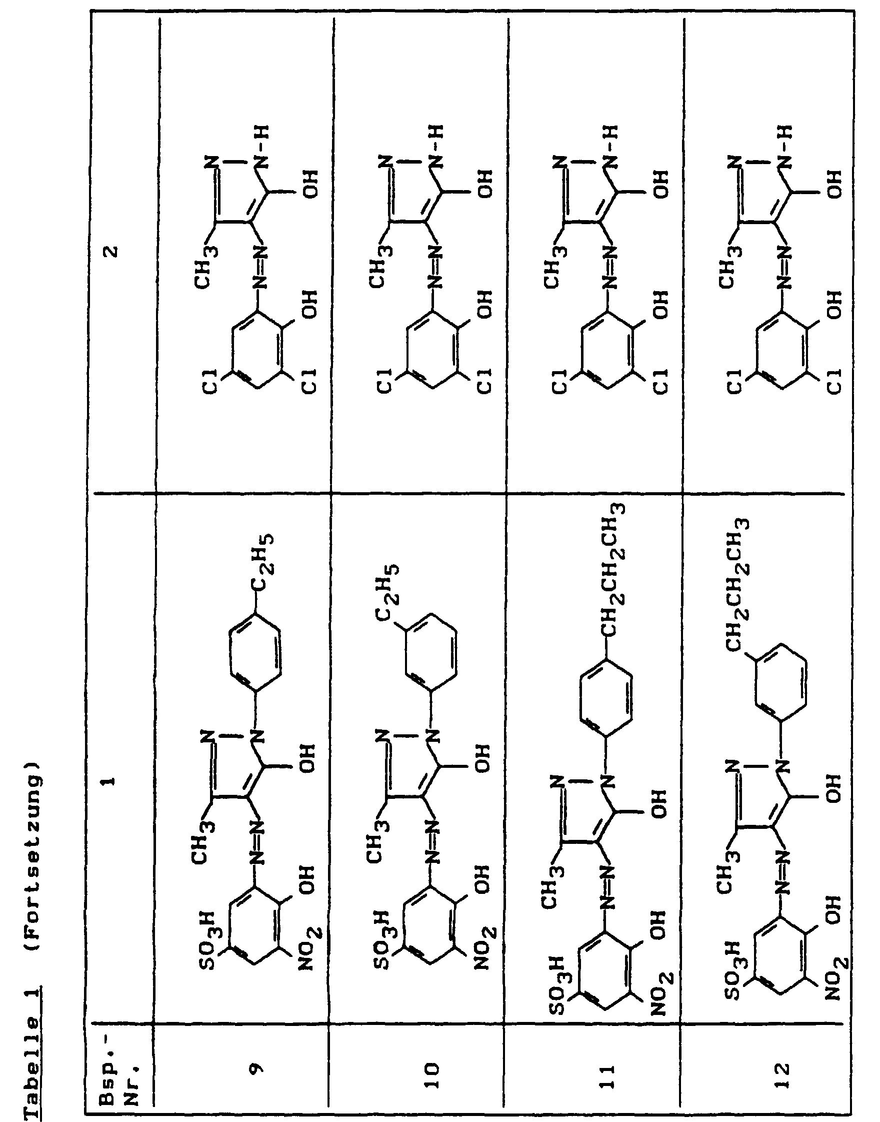

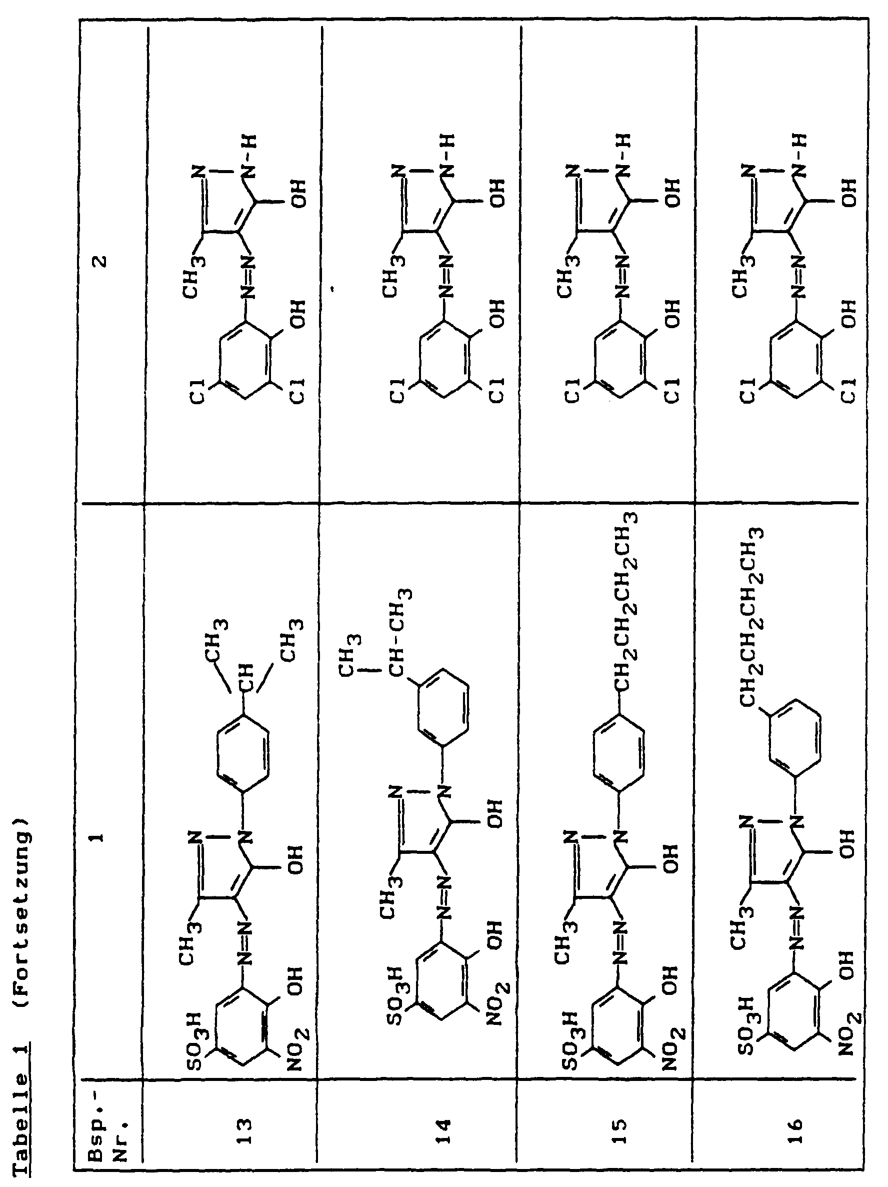

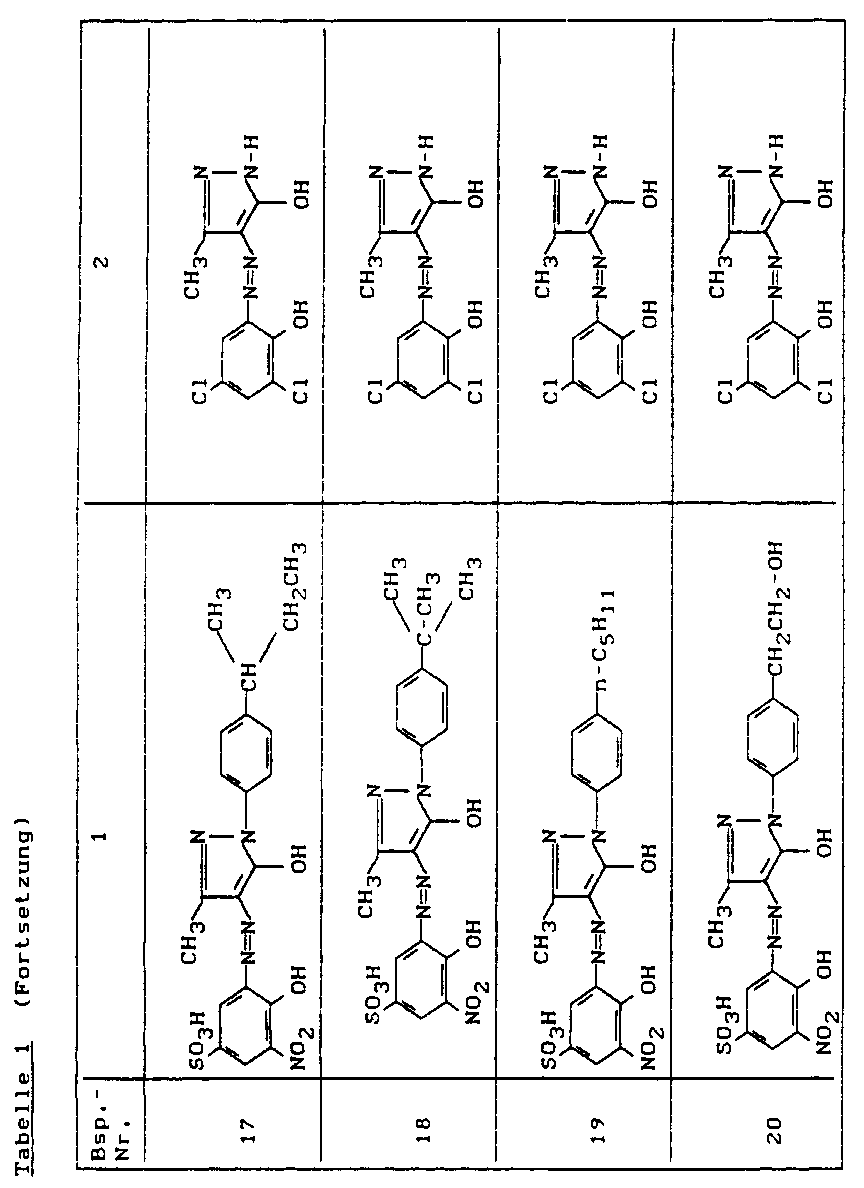

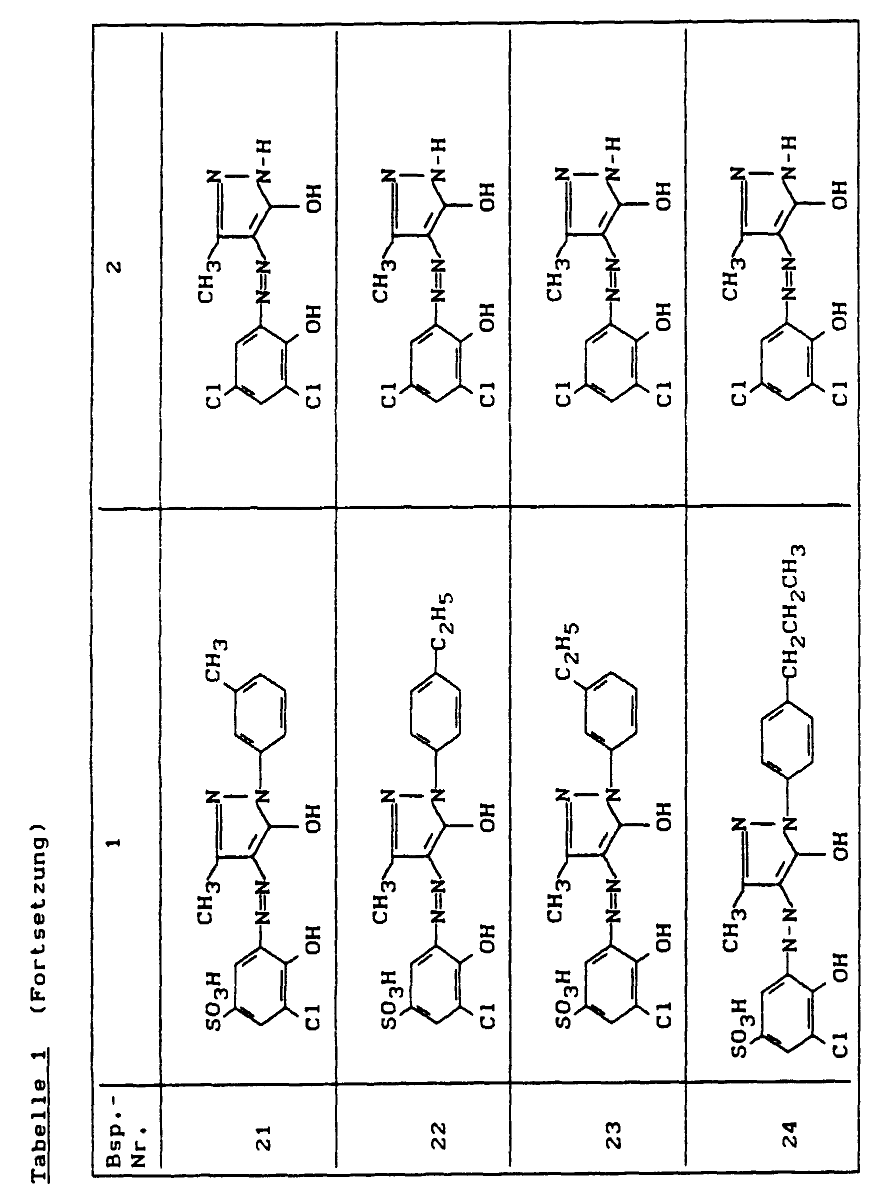

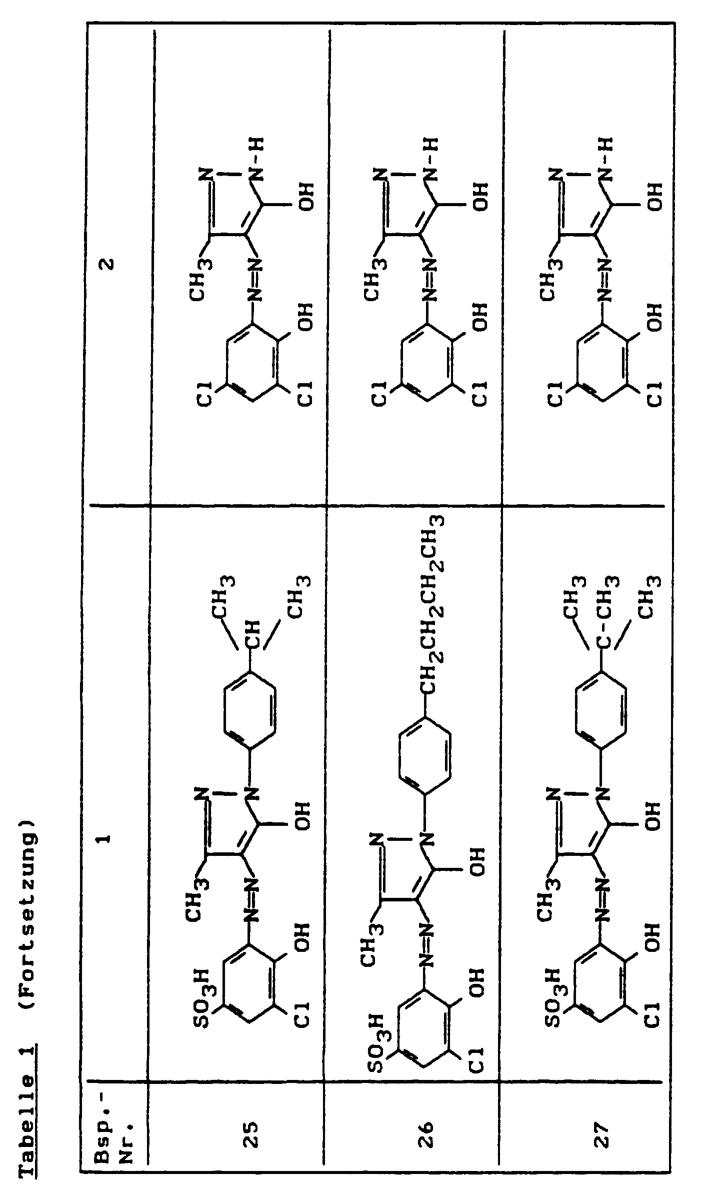

### Beispiel 28

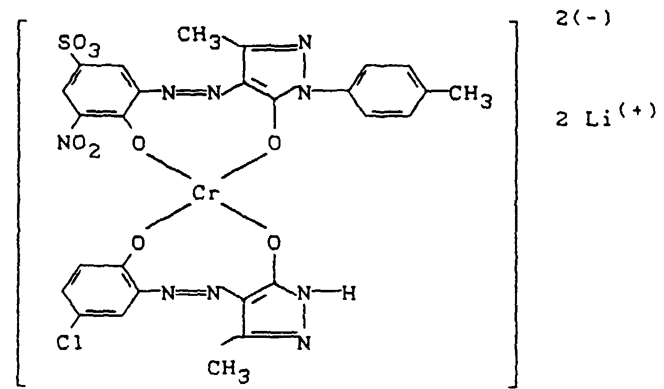

0,1 Mol 1:1-Chromkomplex des Azofarbstoffes aus diazotierter 2-Aminophenol-6-nitro-4-sulfonsäure und 1-(4'-Methylphenyl)-3-methyl-5-pyrazolon wird in Form des feuchten Preßkuchens in 200 g 1-Ethoxy-2-propanol angerührt und mit 0,1 Mol Azofarbstoff aus diazotiertem 4-Chlor-2-aminophenol und 3-Methyl-5-pyrazolon versetzt. Das Gemisch wird auf 75°C erwärmt und die bei der Reaktion freiwerdende Säure mit wäßriger Lithiumhydroxidlösung bei pH 6,5 bis 7,0 abgefangen. Nach etwa einer Stunde ist die Umsetzung zum unsymmetrischen 1:2-Chromkomplex beendet. Man läßt die 75°C heiße Lösung auf Raumtemperatur abkühlen, trennt geringe Salzrückstände durch Filtration ab und erhält eine tiefrote Lösung, welche beim Spritz-und Tauchfärben von Leder gelbstichig rote, nichtbronzierende diffusionsechte Färbungen liefert.

### Beispiele 29 bis 41

Verfährt man wie in Beispiel 28 beschrieben, verwendet jedoch 1:1-Chromkomplexe von Azofarbstoffen, die in der folgenden Tabelle 2 unter Spalte 1 aufgeführt sind, und setzt diese mit den unter Spalte 2 stehenden Azofarbstoffen um, so erhält man die Lösungen weiterer wertvoller 1:2-Chromkomplexfarbstoffe, die Wolle, Polyamid und Leder in gelbstichig bis blaustichig roten Tönen mit guten Echtheiten färben.

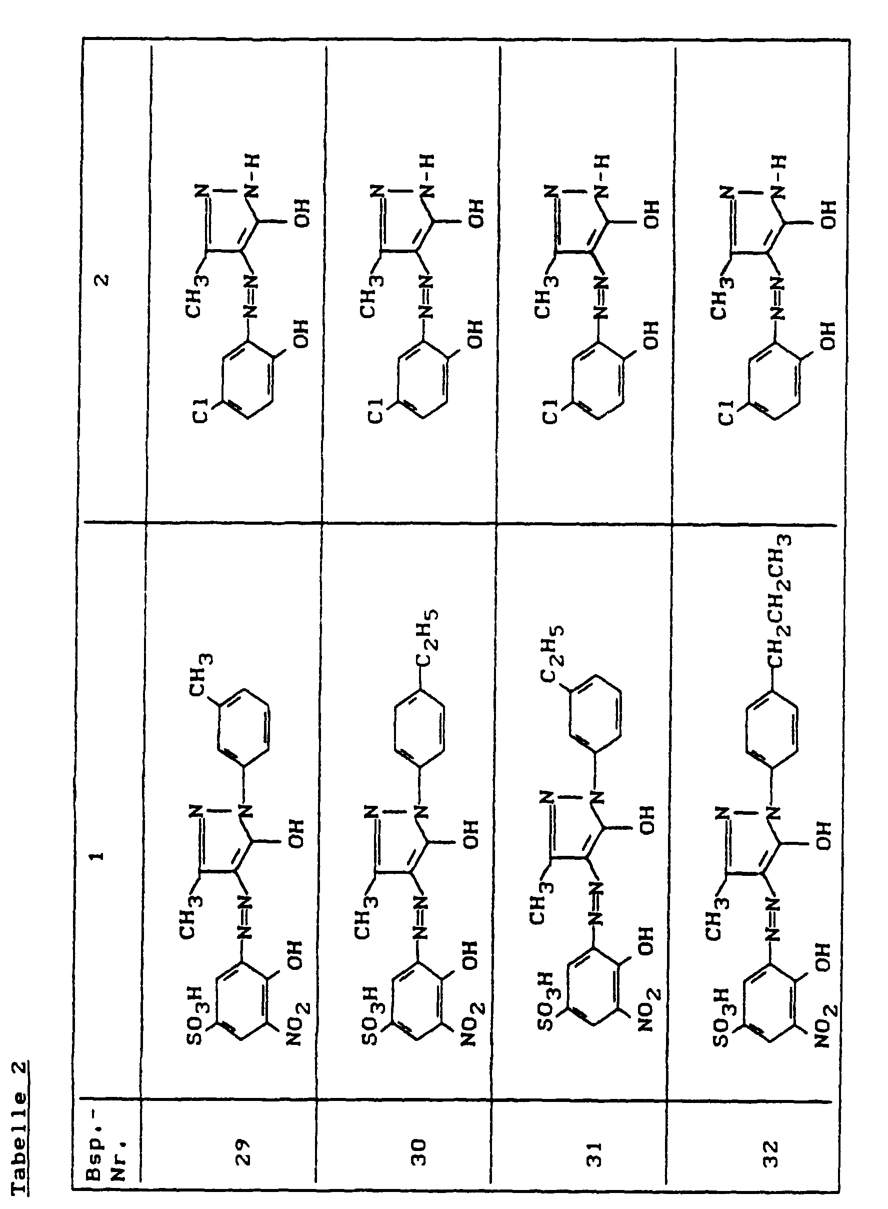

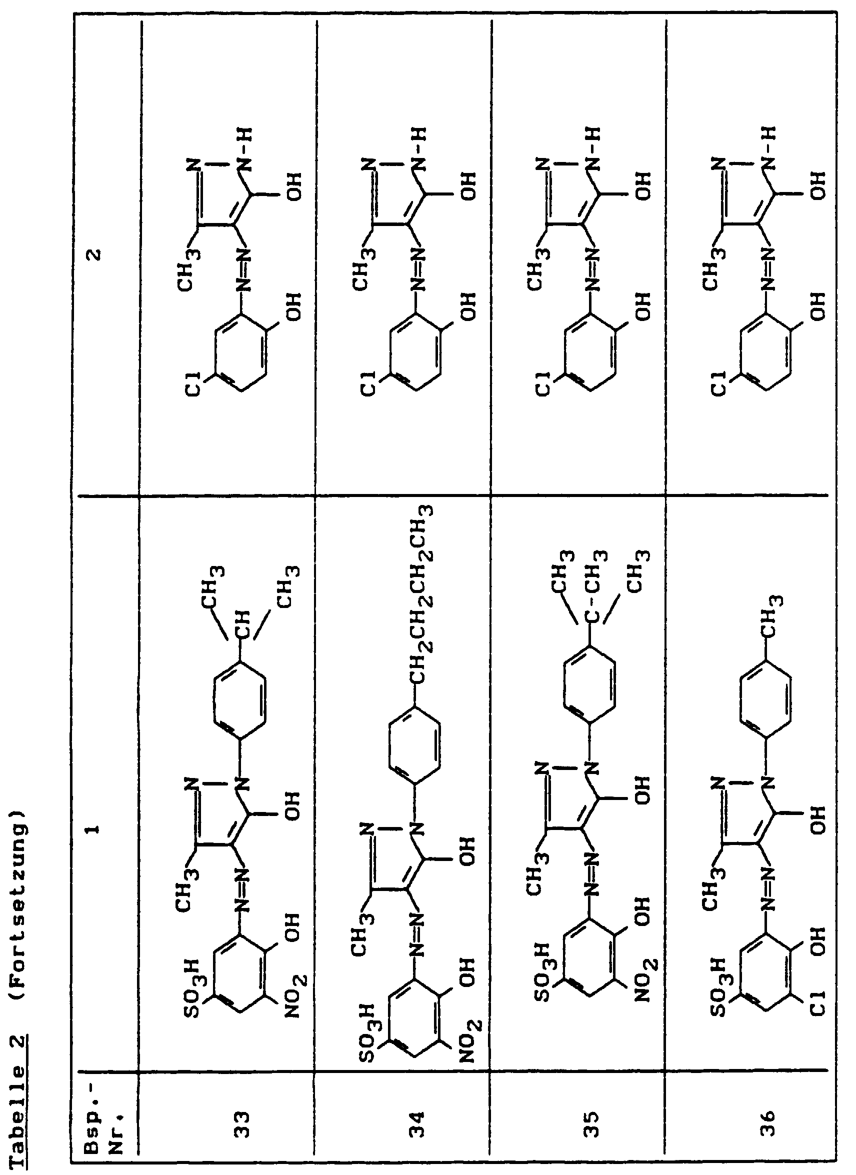

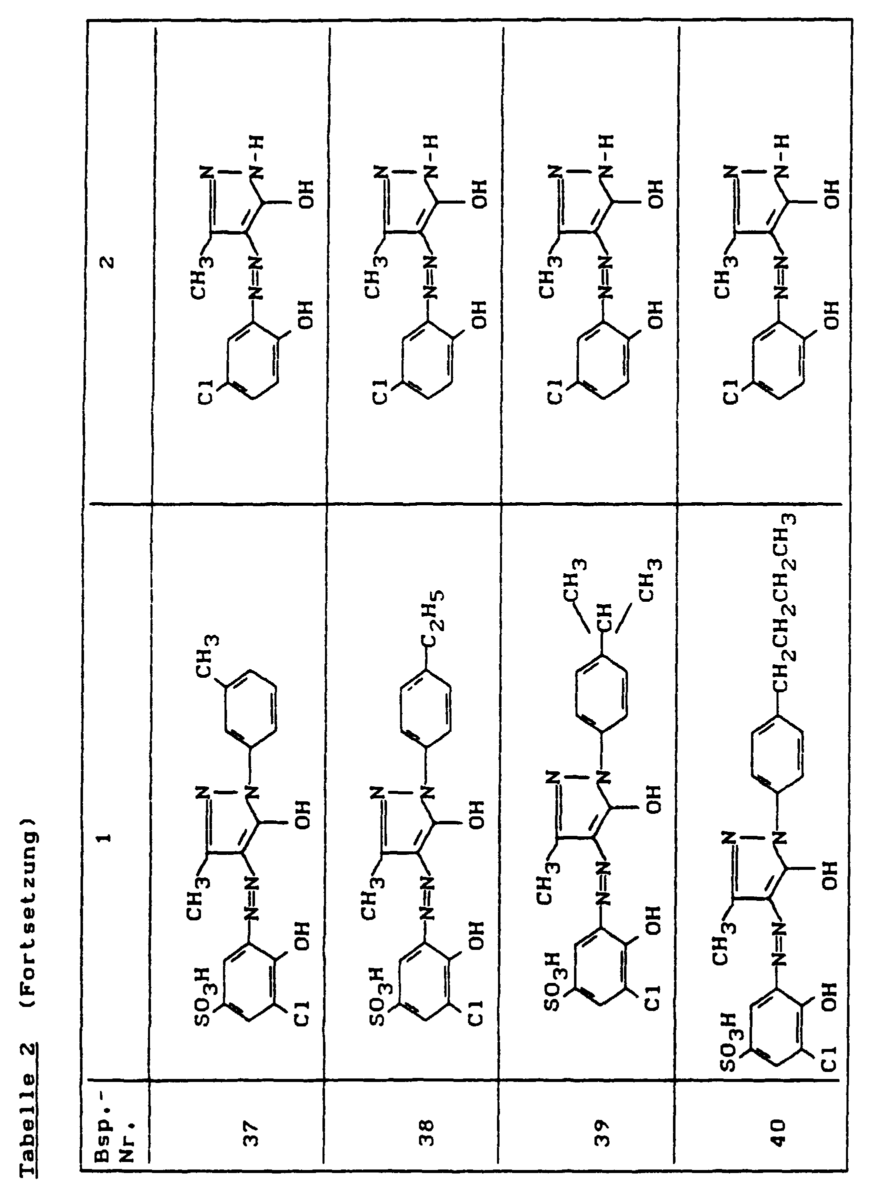

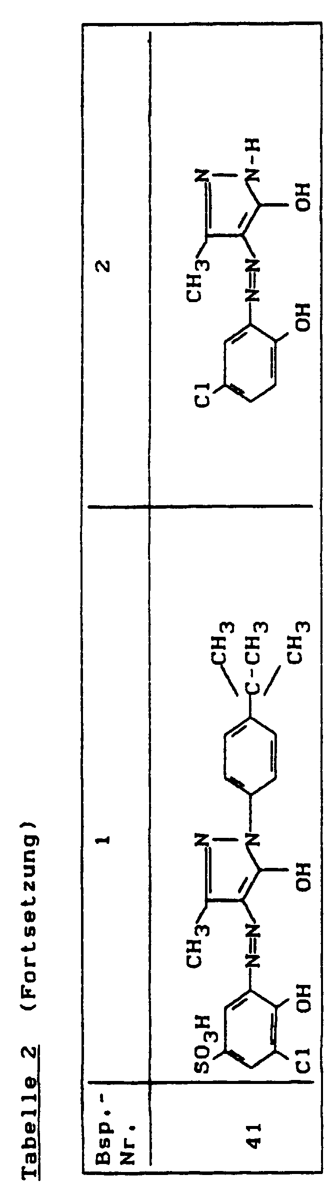

## Patentansprüche

1. Unsymmetrische 1:2-Chromkomplexfarbstoffe der Formel 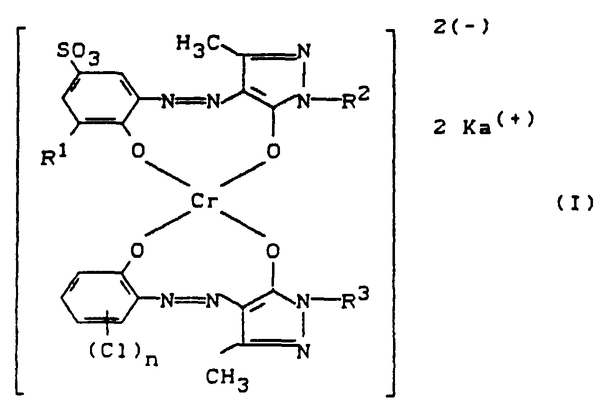 worin
R¹ für Wasserstoff, Chlor oder Nitro steht,
R² und R³ unabhängig voneinander für Wasserstoff oder einen Rest der Formel 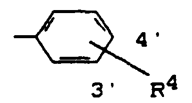 stehen, worin
R⁴ für Alkyl steht, welches in 3'- oder 4'-Stellung des Phenylringes gebunden ist,
mit der Maßgabe, daß einer der Reste R², R³ Wasserstoff bedeutet,
n für 1 oder 2 steht und
Ka⁽⁺⁾ für ein Kation steht.

2. Farbstoffe des Anspruchs 1 der Formel 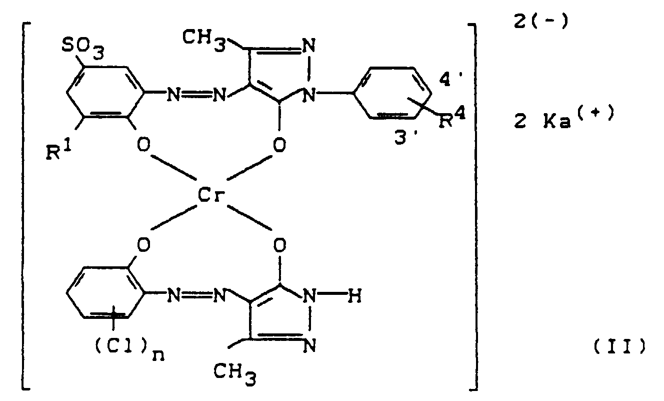 worin
R¹, R⁴, n und Ka⁽⁺⁾ die in Anspruch 1 angegebene Bedeutung haben,
und der Rest R⁴ in 3'- oder in 4'-Stellung des Phenylringes gebunden ist.

3. Farbstoffe der Ansprüche 1 und 2, worin der Rest R⁴ in 4'-Stellung des Phenylringes gebunden ist.

4. Farbstoffe des Anspruchs 1 bis 3, worin R¹ für Chlor oder Nitro steht.

5. Farbstoff der Formel

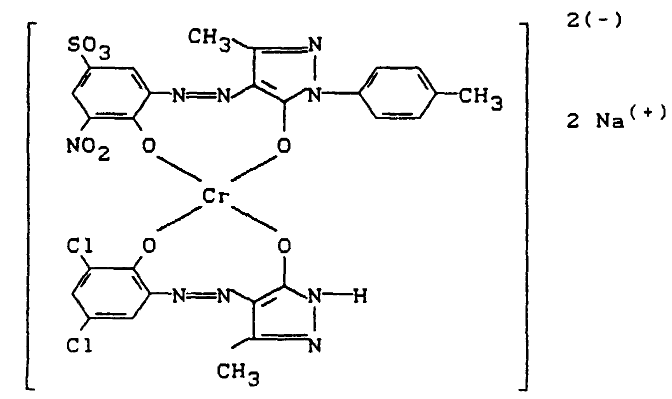

6. Farbstoff der Formel

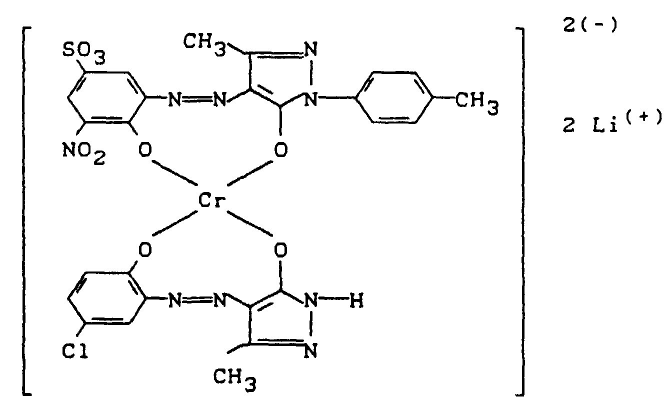

7. Verfahren zum Färben und Bedrucken von natürlichen und synthetischen amidgruppenhaltigen Materialien, dadurch gekennzeichnet, daß Farbstoffe des Anspruchs 1 verwendet werden.

## Claims

1. Unsymmetrical 1:2 chromium complex dyestuffs of the formula 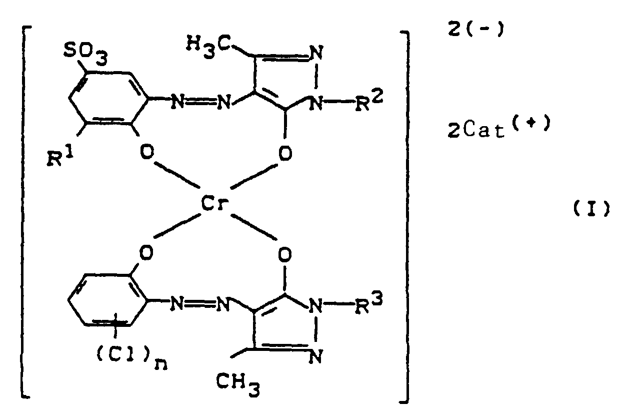 in which
R¹ represents hydrogen, chlorine or nitro,
R² and R³, independently of one another, represent hydrogen or a radical of the formula 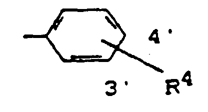 in which
R⁴ represents alkyl which is bound to the phenyl ring in the 3' or 4' position,
with the proviso that one of the radicals R², R³ denotes hydrogen,
n represents 1 or 2 and
Cat⁽⁺⁾ represents a cation.

2. Dyestuffs of Claim 1 of the formula 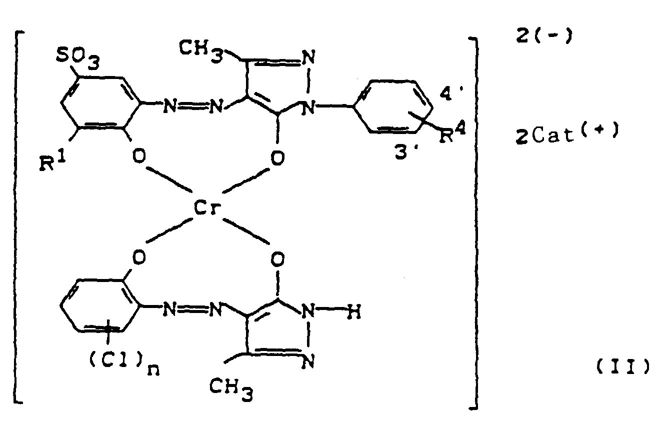 in which
R¹, R⁴, n and Cat⁽⁺⁾ have the meaning given in Claim 1,
and the radical R⁴ is bound to the phenyl ring in the 3' or 4' position.

3. Dyestuffs of Claims 1 and 2, in which the radical R⁴ is bound to the phenyl ring in the 4' position.

4. Dyestuffs of Claim 1 to 3, in which R¹ represents chlorine or nitro.

5. Dyestuff of the formula

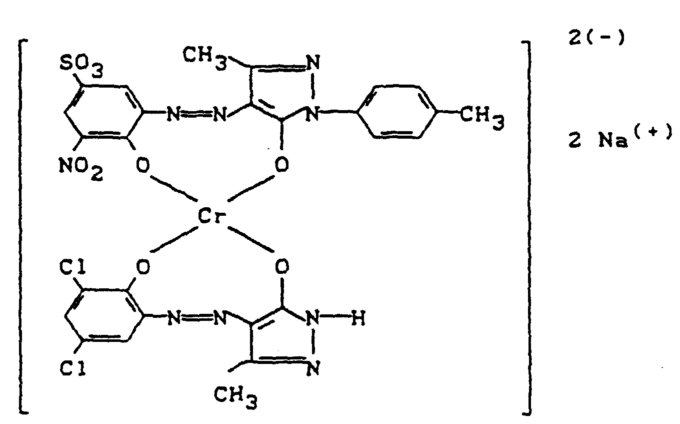

6. Dyestuff of the formula

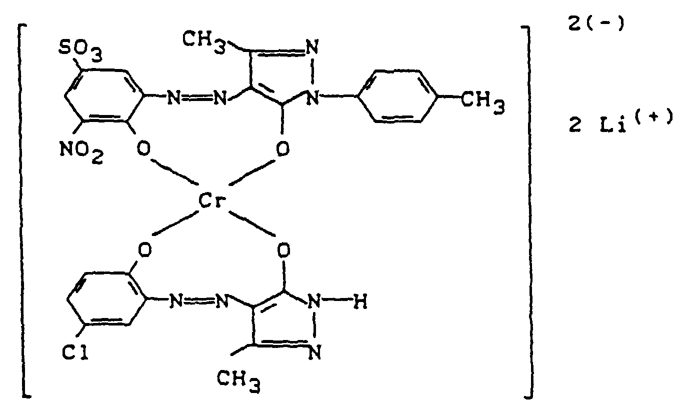

7. Process for the dyeing and printing of natural and synthetic amido-containing materials, characterised in that dyestuffs of Claim 1 are used.

## Revendications

1. Colorants complexes de chrome 1:2 asymétriques de formule (I) 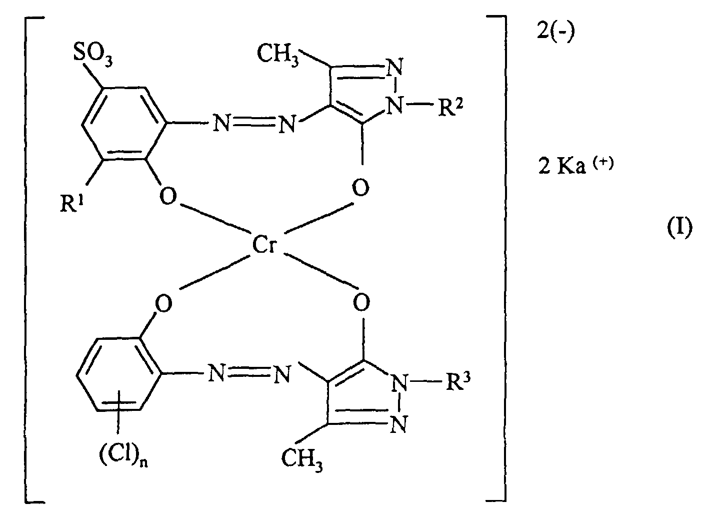 où
R¹ représente un hydrogène, un chlore ou un nitro,
R² et R³ représentent indépendamment l'un de l'autre un hydrogène ou un reste de formule 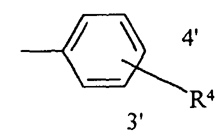 où
R⁴ représente un alkyle, qui est fixé en position 3' ou 4' du cycle phényle, à la condition que l'un des restes R², R³ représente un hydrogène,
n représente 1 ou 2
Ka⁽⁺⁾ représente un cation.

2. Colorants selon la revendication 1 de formule 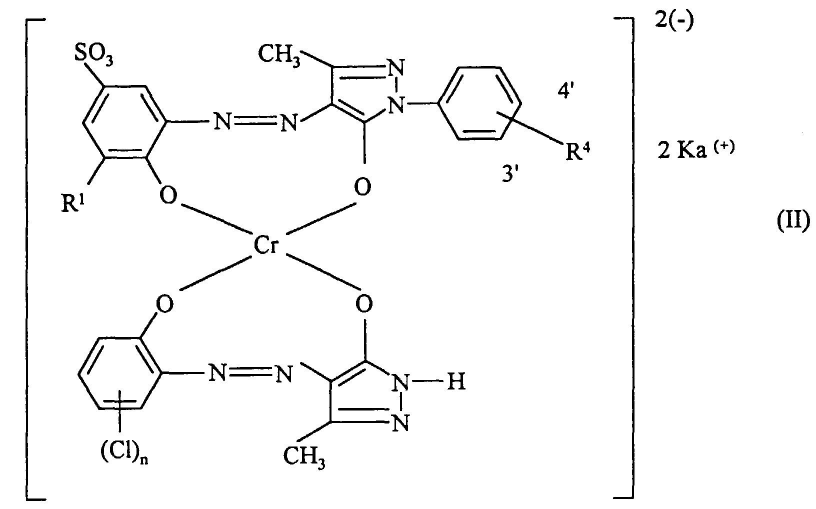 où
R¹, R⁴, n et Ka⁽⁺⁾ ont la signification donnée à la revendication 1,
et le reste R⁴ est fixé en position 3' ou 4' du cycle phényle.

3. Colorants selon les revendications 1 et 2, où le reste R⁴ est fixé en position 4' du cycle phényle.

4. Colorants selon la revendication 1 à 3, où R¹ représente un chlore ou un nitro.

5. Colorant de formule

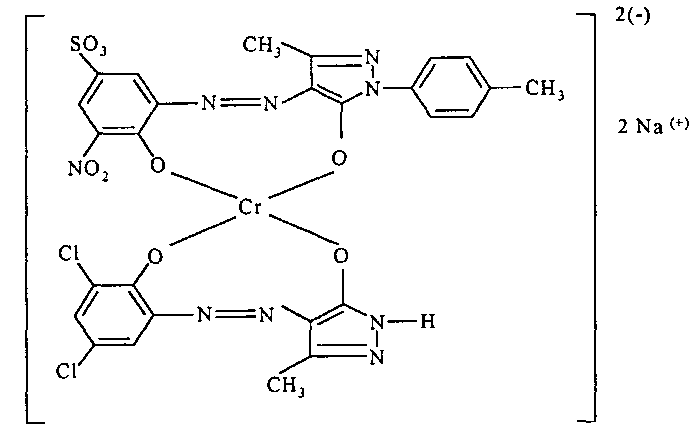

6. Colorant de formule

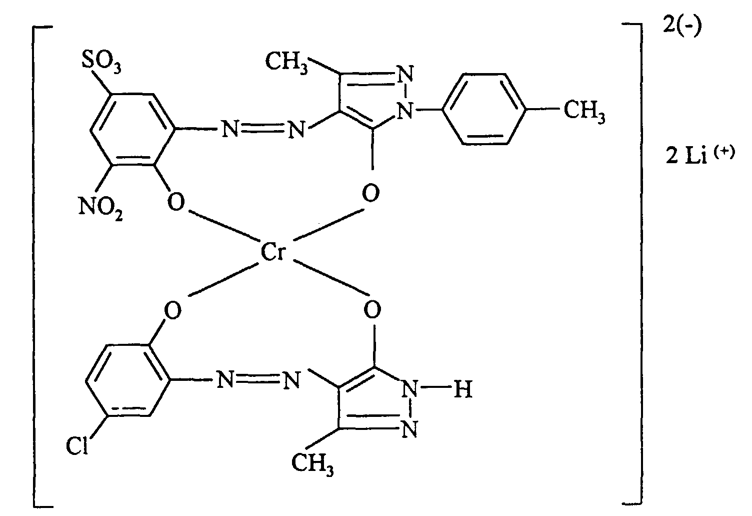

7. Procédé de teinture et d'impression de matériaux naturels et synthétiques contenant des groupes amides, caractérisé en ce qu'on utilise des colorants de la revendication 1.
